(19) Europäisches Patentamt
European Patent Office
Office européen des brevets

(11) **EP 4 009 633 A1**

(12) **DEMANDE DE BREVET EUROPEEN**

(43) Date de publication:
**08.06.2022 Bulletin 2022/23**

(21) Numéro de dépôt: **21183244.9**

(22) Date de dépôt: **06.11.2012**

(51) Classification Internationale des Brevets (IPC):
*H04N 19/117* $^{(2014.01)}$  *H04N 19/13* $^{(2014.01)}$
*H04N 19/176* $^{(2014.01)}$  *H04N 19/18* $^{(2014.01)}$
*H04N 19/463* $^{(2014.01)}$  *H04N 19/467* $^{(2014.01)}$
*H04N 19/48* $^{(2014.01)}$  *H04N 19/91* $^{(2014.01)}$

(52) Classification Coopérative des Brevets (CPC):
**H04N 19/91; H04N 19/117; H04N 19/13;
H04N 19/176; H04N 19/18; H04N 19/463;
H04N 19/467; H04N 19/48**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.11.2011 FR 1160109**

(62) Numéro(s) de document de la (des) demande(s)
initiale(s) en application de l'article 76 CBE:
**18185339.1 / 3 490 258
17154805.0 / 3 182 707
15185082.3 / 2 981 088
12794438.7 / 2 777 270**

(71) Demandeur: **Dolby International AB
1097 DP Amsterdam (NL)**

(72) Inventeurs:
• **HENRY, Felix
35760 Saint Gregoire (FR)**
• **CLARE, Gordon
35740 Pace (FR)**

(74) Mandataire: **Fish & Richardson P.C.
Highlight Business Towers
Mies-van-der-Rohe-Straße 8
80807 München (DE)**

Remarques:
Cette demande a été déposée le 01-07-2021 comme demande divisionnaire de la demande mentionnée sous le code INID 62.

(54) **PROCÉDÉ ET SUPPORT D'ENREGISTREMENT MÉMORISANT UN FLUX DE DONNÉES D'IMAGES CODÉES**

(57) L'invention concerne un procédé de codage d'au moins une image découpée en partitions, ledit procédé mettant en oeuvre les étapes de : - prédiction (C2) des données d'une partition courante en fonction d'au moins une partition de référence déjà codée puis décodée, délivrant une partition prédite ; - détermination (C6) d'un ensemble de données résiduelles par comparaison de données relatives à la partition courante et à la partition prédite, lesdites données résiduelles étant associées respectivement à différentes informations numériques destinées à subir un codage entropique.; Préalablement à l'étape d'élaboration d'un signal contenant lesdites informations codées, il est procédé aux étapes suivantes : - détermination (C71), à partir dudit ensemble de données résiduelles déterminé, d'un sous-ensemble contenant des données résiduelles aptes à être modifiées, - calcul (C8) de la valeur d'une fonction représentative des données résiduelles dudit sous-ensemble déterminé, - comparaison (C9) de ladite valeur calculée à une valeur d'au moins une desdites informations numériques, - en fonction du résultat de ladite comparaison, modification (C10) ou non d'au moins une des données résiduelles dudit sous-ensemble, - en cas de modification, codage entropique (C20) de ladite au moins une donnée résiduelle modifiée.

**Fig. 1**

**Description**

Domaine de l'invention

La présente invention se rapporte de manière générale au domaine du traitement d'images, et plus précisément au codage et au décodage d'images numériques et de séquences d'images numériques.

L'invention peut ainsi, notamment, s'appliquer au codage vidéo mis en œuvre dans les codeurs vidéo actuels (MPEG, H.264, etc) ou à venir (ITU-T/VCEG (H.265) ou ISO/MPEG (HEVC).

Arrière-plan de l'invention

Les codeurs vidéo actuels (MPEG, H.264, ...) utilisent une représentation par blocs de la séquence vidéo. Les images sont découpées en macro-blocs, chaque macro-bloc est lui-même découpé en blocs et chaque bloc, ou macro-bloc, est codé par prédiction intra-images ou inter-images. Ainsi, certaines images sont codées par prédiction spatiale (prédiction intra), tandis que d'autres images sont codées par prédiction temporelle (prédiction inter) par rapport à une ou plusieurs images de référence codées-décodées, à l'aide d'une compensation en mouvement connue par l'homme de l'art.

Pour chaque bloc est codé un bloc résiduel, encore appelé résidu de prédiction, correspondant au bloc original diminué d'une prédiction. Les blocs résiduels sont transformés par une transformée de type transformée en cosinus discrète (DCT), puis quantifiés à l'aide d'une quantification par exemple de type scalaire. Des coefficients dont certains sont positifs et d'autres négatifs sont obtenus à l'issue de l'étape de quantification. Ils sont ensuite parcourus dans un ordre de lecture généralement en zigzag (comme dans la norme JPEG), ce qui permet d'exploiter le nombre important de coefficients nuls dans les hautes fréquences. A l'issue du parcours précité, une liste monodimensionnelle de coefficients est obtenue, laquelle sera appelée « résidu quantifié ». Les coefficients de cette liste sont alors codés par un codage entropique.

Le codage entropique (par exemple de type codage arithmétique ou codage de Huffman) est effectué de la façon suivante :

- une information est codée entropiquement pour indiquer l'emplacement du dernier coefficient non nul de la liste,
- pour chaque coefficient situé avant le dernier coefficient non nul, une information est codée entropiquement pour indiquer si le coefficient est nul ou pas,
- pour chaque coefficient non nul indiqué précédemment, une information est codée entropiquement pour indiquer si le coefficient est égal à un ou pas,
- pour chaque coefficient non nul et non égal à un situé avant le dernier coefficient non nul, une information d'amplitude (valeur absolue du coefficient diminuée de deux) est codée entropiquement,
- pour chaque coefficient non nul, le signe qui lui est affecté est codé par un '0' (pour le signe +) ou un '1' (pour le signe -).

Selon la technique H.264 par exemple, lorsqu'un macrobloc est découpé en blocs, un signal de données, correspondant à chaque bloc, est transmis au décodeur. Un tel signal comprend :

- les résidus quantifiés contenus dans la liste précitée,
- des informations représentatives du mode de codage utilisé, en particulier:

  • le mode de prédiction (prédiction intra, prédiction inter, prédiction par défaut réalisant une prédiction pour laquelle aucune information n'est transmise au décodeur (« en anglais « skip »)) ;
  • des informations précisant le type de prédiction (orientation, image de référence, ...) ;
  • le type de partitionnement ;
  • le type de transformée, par exemple DCT 4x4, DCT $8{\times}8$, etc...
  • les informations de mouvement si nécessaire ;
  • etc.

Le décodage est fait image par image, et pour chaque image, macrobloc par macrobloc. Pour chaque partition d'un macrobloc, les éléments correspondants du flux sont lus. La quantification inverse et la transformation inverse des coefficients des blocs sont effectuées pour produire le résidu de prédiction décodé. Puis, la prédiction de la partition est calculée et la partition est reconstruite en ajoutant la prédiction au résidu de prédiction décodé.

Le codage intra ou inter par compétition, tel que mis en œuvre dans la norme H.264, repose ainsi sur la mise en compétition de différentes informations de codage, telles que celles précitées, dans le but de sélectionner le meilleur mode, c'est-à-dire celui qui optimisera le codage de la partition considérée selon un critère de performance prédéterminé, par exemple le coût débit/distorsion bien connu de l'homme du métier.

Les informations représentatives du mode de codage sélectionné sont contenues dans le signal de données transmis par le codeur au décodeur. Le décodeur est ainsi capable d'identifier le mode de codage sélectionné au codeur, puis d'appliquer la prédiction conforme à ce mode.

Dans le document « Data Hiding of Motion Information in Chroma and Luma Samples for Video Compression », J.-M. Thiesse, J. Jung and M. Antonini, International workshop on multimedia signal processing, 2011, il est présenté un procédé de dissimulation de données (traduction anglaise de « Data Hiding ») mis en œuvre au cours d'une compression vidéo.

Plus précisément, il est proposé d'éviter d'inclure dans le signal à transmettre au décodeur au moins un index de compétition tel qu'issu d'une pluralité d'index de compétition à transmettre. Un tel index est par exemple l'index MVComp qui représente une information permettant d'identifier le prédicteur de vecteur de mouvement utilisé pour un bloc prédit en mode Inter. Un tel index qui peut valoir 0 ou 1, n'est pas inscrit directement dans le signal de données codées, mais transporté par la parité de la somme des coefficients du résidu quantifié. Une association est créée entre la parité du résidu quantifié et l'index MVComp. A titre d'exemple, la valeur paire du résidu quantifié est associée à l'index MVComp de valeur 0, tandis que la valeur impaire du résidu quantifié est associée à l'index MVComp de valeur 1. Deux cas peuvent se présenter. Dans un premier cas, si la parité du résidu quantifié correspond déjà à celle de l'index MVComp que l'on veut transmettre, le résidu quantifié est codé de façon classique. Dans un deuxième cas, si la parité du résidu quantifié est différente de celle de l'index MVComp que l'on veut transmettre, il est procédé à une modification du résidu quantifié de manière à ce que sa parité soit la même que celle de l'index MVComp. Une telle modification consiste à incrémenter ou décrémenter un ou plusieurs coefficients du résidu quantifié d'une valeur impaire (ex : +1, -1, +3, -3, +5, -+5...) et de ne retenir que la modification qui optimise un critère prédéterminé, en l'occurrence le coût débit-distorsion précité.

Au décodeur, l'index MVComp n'est pas lu dans le signal. Le décodeur se contente simplement de déterminer classiquement le résidu. Si la valeur de ce résidu est paire, l'index MVComp est mis à 0. Si la valeur de ce résidu est impaire, l'index MVComp est mis à 1.

Conformément à la technique qui vient d'être présentée, les coefficients qui subissent la modification ne sont pas toujours choisis de façon optimale, de sorte que la modification appliquée entraîne des perturbations dans le signal transmis au décodeur. De telles perturbations nuisent inévitablement à l'efficacité de la compression vidéo.

Objet et résumé de l'invention

Un des buts de l'invention est de remédier à des inconvénients de l'état de la technique précité.

A cet effet, un objet de la présente invention concerne un procédé de codage d'au moins une image découpée en partitions, un tel procédé mettant en œuvre les étapes de :

- prédiction des données d'une partition courante en fonction d'au moins une partition de référence déjà codée puis décodée, délivrant une partition prédite ;
- détermination d'un ensemble de données résiduelles par comparaison de données relatives à la partition courante et à la partition prédite, les données résiduelles étant associées respectivement à différentes informations numériques qui sont destinées à subir un codage entropique,
- élaboration d'un signai contenant les informations codées.

Le procédé selon l'invention est remarquable en ce qu'il met en oeuvre, préalablement à l'étape d'élaboration de signal, les étapes suivantes :

- détermination, à partir de l'ensemble de données résiduelles déterminé, d'un sous-ensemble contenant des données résiduelles aptes à être modifiées,
- calcul de la valeur d'une fonction représentative des données résiduelles du sous-ensemble déterminé,
- comparaison de la valeur calculée à une valeur d'au moins une des informations numériques,
- en fonction du résultat de la comparaison, modification ou non d'au moins une des données résiduelles du sous-ensemble,
- en cas de modification, codage entropique de la au moins une donnée résiduelle modifiée.

Une telle disposition permet d'appliquer une technique de dissimulation de données sur un ensemble réduit de données résiduelles, dans lequel les données résiduelles sont aptes à être modifiées.

Selon l'invention, on entend par données résiduelles aptes à être modifiées, des données pour lesquelles l'application d'une modification n'entraîne pas de désynchronisation entre le codeur et le décodeur.

Ainsi conformément à l'invention, les données résiduelles qui sont destinées à subir une modification sont sélectionnées de façon bien plus fiable que dans l'art antérieur précité, ce qui permet d'obtenir une meilleure qualité de reconstruction de l'image au décodeur.

Par ailleurs, la possibilité de modifier un nombre réduit de données résiduelles permet d'accélérer l'encodage.

Dans un mode de réalisation particulier, les étapes qui font suite à l'étape de détermination du sous-ensemble de données résiduelles sont mises en œuvre uniquement si un critère prédéterminé, fonction des données résiduelles aptes à être modifiées, est respecté.

Une telle disposition permet en outre au codeur de décider de façon rationnelle s'il convient d'appliquer ou non une technique de dissimulation de données. Une telle étape de décision a pour avantage de s'appliquer uniquement sur l'ensemble réduit de données résiduelles aptes à être modifiées. Il est ainsi assuré d'appliquer la technique de dissimulation de données de façon beaucoup plus appropriée que dans l'art antérieur précité, en particulier sur un nombre de données résiduelles mieux choisi, dont il est certain qu'une fois ces données modifiées, la perturbation du signal engendrée par une telle modification n'aura pas d'impact négatif sur la qualité de la reconstruction de l'image au décodeur.

Dans un autre mode de réalisation particulier, le critère de décision prédéterminé est fonction du résultat d'une comparaison entre le nombre de données résiduelles aptes à être modifiées et un nombre prédéterminé.

Une telle disposition permet d'augmenter les performances de compression du codeur arithmétique tout en réduisant efficacement le coût de signalisation. Cette disposition permet en effet de détecter précisément le nombre de données résiduelles à partir duquel il est judicieux d'appliquer la technique de dissimulation de données sans que celle-ci n'entraîne de perturbations élevées dans le signal à transmettre au décodeur.

Dans encore un autre mode de réalisation particulier, dans le cas où une pluralité d'informations numériques est considérée au cours de l'étape de comparaison, cette dernière consiste à comparer la valeur calculée d'une fonction représentative des données résiduelles du sous-ensemble déterminé à la valeur d'une fonction représentative de la pluralité d'informations numériques.

Une telle disposition permet d'optimiser les performances de compression du codeur arithmétique tout en optimisant la réduction du coût de signalisation, puisqu'elle permet de cacher plusieurs informations numériques dans le signal à transmettre au décodeur.

Dans encore un autre mode de réalisation particulier, la au moins une information numérique correspond au signe d'une donnée résiduelle.

Le signe est une information particulièrement pertinente à cacher en raison du fait que la probabilité d'apparition d'un signe positif ou négatif est équiprobable. De ce fait, étant donné qu'un signe est codé nécessairement sur un bit, il est ainsi possible, en cachant cette information, d'économiser un bit dans le signal à transmettre au décodeur, ce qui réduit sensiblement le coût de signalisation. La réduction d'un tel coût sera d'autant plus élevée qu'il est possible selon l'invention de cacher une pluralité de signes, et donc une pluralité de bits.

Corrélativement, l'invention concerne encore un dispositif de codage d'au moins une image découpée en partitions, un tel dispositif comprenant :

- des moyens de prédiction des données d'une partition courante en fonction d'au moins une partition de référence déjà codée puis décodée, délivrant une partition prédite,
- des moyens de détermination d'un ensemble de données résiduelles aptes à comparer des données relatives à la partition courante et à la partition prédite, les données résiduelles étant associées respectivement à différentes informations numériques qui sont destinées à subir un codage entropique,
- des moyens d'élaboration d'un signal contenant les informations codées.

Un tel dispositif de codage est remarquable en ce qu'il comprend en amont des moyens d'élaboration, des moyens de traitement qui sont aptes à :

- déterminer, à partir de l'ensemble de données résiduelles déterminé, d'un sous-ensemble contenant des données résiduelles aptes à être modifiées,
- calculer la valeur d'une fonction représentative des données résiduelles du sous-ensemble déterminé,
- comparer la valeur calculée à une valeur d'au moins une des informations numériques,
- modifier ou non au moins une des données résiduelles du sous-ensemble déterminé, en fonction du résultat de la modification,

ainsi que des moyens de codage entropique de la au moins une donnée résiduelle modifiée, en cas de modification par les moyens de traitement.

De façon correspondante, l'invention concerne aussi un procédé de décodage d'un signal de données représentatif d'au moins une image découpée en partitions qui a été précédemment codée, comprenant une étape d'obtention, par décodage entropique de données du signal, d'informations numériques associées à des données résiduelles relatives à au moins une partition précédemment codée.

Un tel procédé de décodage est remarquable en ce qu'il comprend les étapes suivantes :

- détermination, à partir des données résiduelles, d'un sous-ensemble contenant des données résiduelles aptes à avoir été modifiées au cours d'un codage précédent,
- calcul de la valeur d'une fonction représentative des données résiduelles dudit sous-ensemble déterminé,
- obtention de la valeur d'au moins une information numérique différente de celles obtenues par décodage entropique, à partir de la valeur calculée.

Dans un mode de réalisation particulier, les étapes qui font suite à l'étape de détermination du sous-ensemble de données résiduelles sont mises en œuvre uniquement si un critère prédéterminé, fonction des données résiduelles aptes à avoir été modifiées, est respecté.

Dans un autre mode de réalisation particulier, le critère de décision prédéterminé est fonction du résultat d'une comparaison entre le nombre de données résiduelles aptes à avoir été modifiées et un nombre prédéterminé.

Dans encore un autre mode de réalisation particulier, une pluralité de valeurs associées respectivement à une pluralité d'informations numériques différentes de celles obtenues par décodage entropique est obtenue à partir de ladite valeur calculée.

Dans encore un autre mode de réalisation particulier, la au moins une information numérique correspond au signe d'une donnée résiduelle.

Corrélativement, l'invention concerne encore un dispositif de décodage d'un signal de données représentatif d'au moins une image découpée en partitions qui a été précédemment codée, comprenant des moyens d'obtention, par décodage entropique de données du signal, d'informations numériques associées à des données résiduelles relatives à au moins une partition précédemment codée.

Un tel dispositif de décodage est remarquable en ce qu'il comprend des moyens de traitement qui sont aptes à :

- déterminer, à partir des données résiduelles, un sous-ensemble contenant des données résiduelles aptes à avoir été modifiées au cours d'un codage précédent,
- calculer la valeur d'une fonction représentative des données résiduelles du sous-ensemble déterminé,
- obtenir la valeur d'au moins une information numérique différente de celles obtenues par décodage entropique, à partir de la valeur calculée.

L'invention vise également un programme d'ordinateur comportant des instructions pour l'exécution des étapes du procédé de codage ou de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif de codage, le procédé de décodage, le dispositif de décodage et les programmes d'ordinateur précités présentent au moins les mêmes avantages que ceux conférés par le procédé de codage selon la présente invention.

Brève description des dessins

D'autres caractéristiques et avantages apparaîtront à la lecture de deux modes de réalisation préférés décrits en référence aux figures dans lesquelles :

- la figure 1 représente les principales étapes du procédé de codage selon l'invention,
- la figure 2 représente un mode de réalisation d'un dispositif de codage selon l'invention,
- la figure 3 représente les principales étapes du procédé de décodage selon l'invention,
- la figure 4 représente un mode de réalisation d'un dispositif de décodage selon l'invention.

Description détaillée de la partie codage

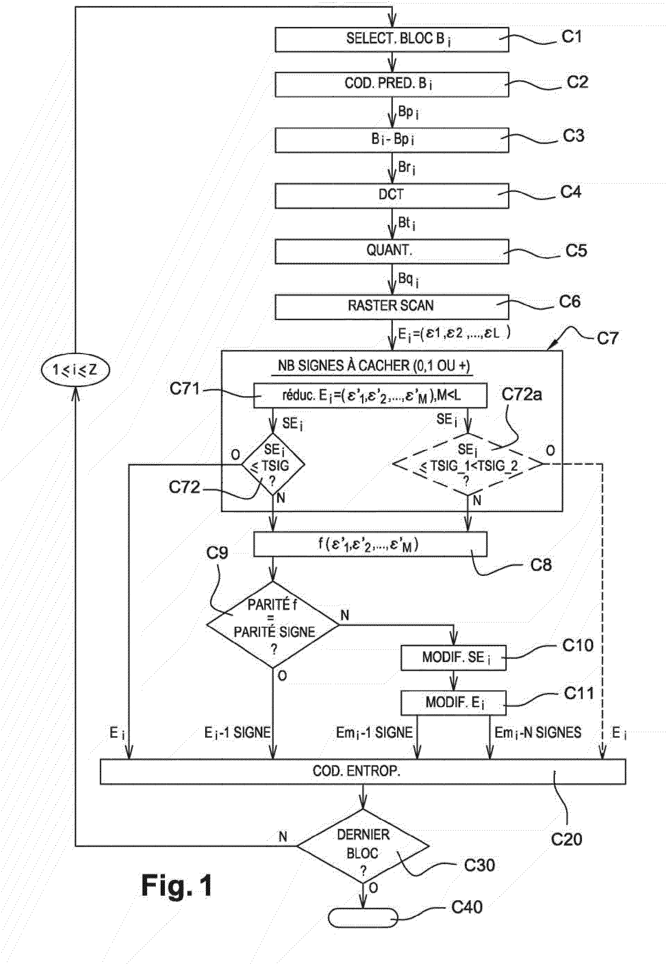

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C40, représentées à la **figure 1**.

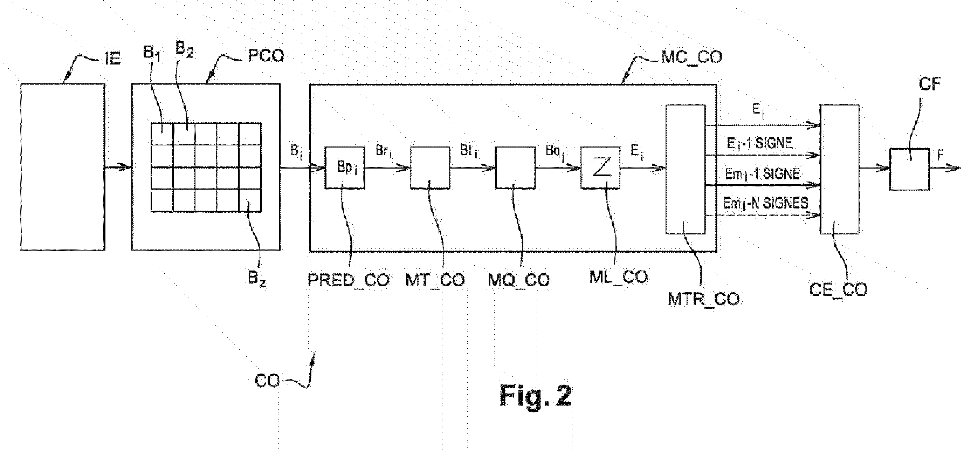

Selon le mode de réalisation de l'invention, le procédé de codage selon l'invention est implémenté dans un dispositif de codage ou codeur CO dont un mode de réalisation est représenté sur la **figure 2**.

Conformément à l'invention, il est procédé, préalablement au codage proprement dit, à un découpage d'une image IE d'une séquence d'images à coder dans un ordre prédéterminé, en une pluralité Z de partitions $B_1, B_2,...,B_i,..., B_Z$, comme représenté sur la **figure 2**.

Il convient de noter qu'au sens de l'invention, le terme « partition » signifie unité de codage (de l'anglais « coding unit »). Cette dernière terminologie est notamment utilisée dans la norme HEVC/H.265 en cours d'élaboration, par exemple dans le document accessible à l'adresse Internet suivante :
http://phenix.int-evry.fr/jct/doc_end_user/current_document.php?id=3286

En particulier, une telle unité de codage regroupe des ensembles de pixels de forme rectangulaire ou carrée, encore appelés blocs, macroblocs, ou bien des ensembles de pixels présentant d'autres formes géométriques.

Dans l'exemple représenté sur la **figure 2**, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module PCO de partitionnement représenté à la **figure 2** qui utilise par exemple un algorithme de partitionnement bien connu en tant que tel.

A la suite de ladite étape de découpage, il est procédé au codage de chacune des partitions courantes $B_i$ (i étant un entier tel que $1 \leq i \leq Z$) de ladite image IE.

Dans l'exemple représenté sur la **figure 2,** un tel codage est appliqué successivement à chacun des blocs $B_1$ à Bz de l'image courante IE. Les blocs sont codés selon par exemple un parcours tel que le parcours « raster scan » bien connu de l'homme du métier.

Le codage selon l'invention est mis en œuvre dans un module logiciel de codage MC_CO du codeur CO, tel que représenté sur la **figure 2.**

Au cours d'une étape C1 représentée à la **figure 1,** le module de codage MC_CO de la **figure 2** sélectionne comme bloc courant $B_i$ le premier bloc $B_1$ à coder de l'image courante IE. Comme représenté à la **figure 2**, il s'agit du premier bloc de gauche de l'image IE.

Au cours d'une étape C2 représentée à la **figure 1**, il est procédé au codage prédictif du bloc courant $B_1$ par des techniques connues de prédiction intra et/ou inter, au cours duquel le bloc $B_1$ est prédit par rapport à au moins un bloc précédemment codé et décodé. Une telle prédiction est effectuée par un module logiciel de prédiction PRED_CO tel que représenté à la **figure 2.**

Il va de soi que d'autres modes de prédiction intra tels que proposé dans la norme H.264 sont possibles.

Le bloc courant $B_1$ peut être également soumis à un codage prédictif en mode inter, au cours duquel le bloc courant est prédit par rapport à un bloc issu d'une image précédemment codée et décodée. D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit $Bp_1$ qui est une approximation du bloc courant $B_1$. Les informations relatives à ce codage prédictif sont destinées à être inscrites dans un signal à transmettre au décodeur. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO.

Au cours d'une étape suivante C3 représentée à la **figure 1,** le module de prédiction PRED_CO compare les données relatives au bloc courant $B_1$ aux données du bloc prédit $Bp_1$. Plus précisément, au cours de cette étape, il est procédé classiquement à la soustraction du bloc prédit $Bp_1$ du bloc courant $B_1$ pour produire un bloc résidu $Br_1$.

Au cours d'une étape suivante C4 représentée à la **figure 1,** il est procédé à la transformation du bloc résidu $Br_1$ selon une opération classique de transformation directe telle que par exemple une transformation en cosinus discrètes de type DCT, pour produire un bloc transformé $Bt_1$. Une telle opération est effectuée par un module logiciel MT_CO de transformée, tel que représenté **figure 2.**

Au cours d'une étape suivante C5 représentée à la **figure 1,** il est procédé à la quantification du bloc transformé $Bt_1$ selon une opération classique de quantification, telle que par exemple une quantification scalaire. Un bloc $Bq_1$ de coefficients quantifiés est alors obtenu. Une telle étape est effectuée au moyen d'un module logiciel de quantification MQ_CO tel que représenté à la **figure 2.**

Au cours d'une étape suivante C6 représentée à la **figure 1,** il est procédé à un parcours, dans un ordre prédéfini, des coefficients quantifiés du bloc $Bq_1$. Dans l'exemple représenté, il s'agit d'un parcours en zigzag classique. Une telle étape est effectuée par un module logiciel de lecture ML_CO, tel que représenté à la **figure 2.** A l'issue de l'étape C6, une liste monodimensionnelle $E_1 = (\varepsilon1, \varepsilon2,..., \varepsilon L)$ de coefficients est obtenue, plus connue sous l'appellation « résidu quantifié », où L est un entier supérieur ou égal à 1. Chacun des coefficients de la liste $E_1$ est associé à différentes informations numériques qui sont destinées à subir un codage entropique. De telles informations numériques sont décrites ci-dessous à titre d'exemple.

Supposons que dans l'exemple représenté, L=16 et que la liste $E_1$ contient les seize coefficients suivants : $E_1 = (0, +9, -7, 0, 0, +1, 0, -1, +2, 0, 0, +1, 0, 0, 0, 0)$.

En l'espèce :

- pour chaque coefficient situé avant le dernier coefficient non nul de la liste $E_1$, une information numérique, telle qu'un bit, est destinée à être codée entropiquement pour indiquer si le coefficient est nul ou pas : si le coefficient est nul, c'est par exemple le bit de valeur 0 qui sera codé, tandis que si le coefficient est non nul, c'est le bit de valeur 1 qui sera codé ;

- pour chaque coefficient non nul +9, -7, +1, -1, +2, +1, une information numérique, telle qu'un bit, est destinée à être codée entropiquement pour indiquer si la valeur absolue du coefficient est égal à un ou pas : si elle est égale à 1, c'est par exemple le bit de valeur 1 qui sera codé, tandis que si elle est égale à 0, c'est le bit de valeur 0 qui sera codé ;

- pour chaque coefficient non nul et dont la valeur absolue est non égale à un situé avant le dernier coefficient non nul, tels les coefficients de valeur +9, -7, +2, une information d'amplitude (valeur absolue du coefficient à laquelle est retranchée la valeur deux) est codée entropiquement,

- pour chaque coefficient non nul, le signe qui lui est affecté est codé par une information numérique, telle qu'un bit par exemple mis à '0' (pour le signe +) ou à '1' (pour le signe -).

On va maintenant décrire, en référence à la **figure 1**, les étapes spécifiques de codage selon l'invention.

Conformément à l'invention, il est décidé d'éviter de coder entropiquement au moins une des informations numériques précitées. Pour les raisons expliquées plus haut dans la description, dans un mode préféré de réalisation, il est décidé de ne pas coder entropiquement au moins un signe d'un desdits coefficients de la liste $E_1$.

A titre d'exemple alternatif, il pourrait notamment être décidé de coder entropiquement le bit de poids faible de la représentation binaire de l'amplitude du premier coefficient non nul de ladite liste $E_1$.

A cet effet, au cours d'une étape C7 représentée à la **figure 1**, il est procédé au choix du nombre de signes à cacher au cours de l'étape ultérieure de codage entropique. Une telle étape est effectuée par un module logiciel de traitement MTR_CO, tel que représenté sur la **figure 2.**

Dans le mode préféré de réalisation, le nombre de signes à cacher est un ou zéro. En outre, conformément audit mode de réalisation préféré, c'est le signe du premier coefficient non nul qui est destiné à être caché. Dans l'exemple représenté, il s'agit donc de cacher le signe du coefficient $\varepsilon2=+9$.

Dans un mode de réalisation alternatif, le nombre de signes à cacher est soit zéro, soit un, soit deux, soit trois, soit plus.

Conformément au mode de réalisation préféré de l'étape C7, il est procédé, au cours d'une première sous-étape C71 représentée à la **figure 1,** à la détermination, à partir de ladite liste $E_1$, d'une sous-liste $SE_1$ contenant des coefficients aptes à être modifiés $\varepsilon'1$, $\varepsilon'2$,..., $\varepsilon'M$ où $M<L$. De tels coefficients seront appelés coefficients modifiables dans la suite de la description.

Selon l'invention, un coefficient est modifiable si la modification de sa valeur quantifiée ne provoque pas de désynchronisation au décodeur, une fois que ce coefficient modifié est traité par le décodeur. Ainsi, le module de traitement MTR_CO est configuré initialement pour ne pas modifier :

- le ou les coefficients nuls situés avant le premier coefficient non nul, de façon à ce que le décodeur n'affecte pas la valeur du signe caché à ce ou ces coefficients nuls,
- et pour des raisons de complexité de calcul, le ou les coefficients nuls situés après le dernier coefficient non nul.

Dans l'exemple représenté, à l'issue de la sous-étape C71, la sous-liste $SE_1$ obtenue est telle que $SE_1=(9,-7,0,0,1,0,-1,2,0,0,1)$. En conséquence, onze coefficients modifiables sont obtenus.

Au cours d'une sous-étape suivante C72 représentée à la **figure 1**, le module de traitement MTR_CO procède à la comparaison du nombre de coefficients modifiables avec un seuil prédéterminé TSIG. Dans le mode préféré de réalisation, TSIG vaut 4.

Si le nombre de coefficients modifiables est inférieur au seuil TSIG, il est procédé, au cours d'une étape C20 représentée à la **figure 1**, à un codage entropique classique des coefficients de la liste $E_1$, tel que celui réalisé par exemple dans un codeur CABAC, désigné par la référence CE_CO sur la **figure 2**. A cet effet, le signe de chaque coefficient non nul de la liste $E_1$ est codé entropiquement.

Si le nombre de coefficients modifiables est supérieur au seuil TSIG, au cours d'une étape C8 représentée à la **figure 1**, le module de traitement MTR_CO calcule la valeur d'une fonction f qui est représentative des coefficients de la sous-liste $SE_1$.

Dans le mode préféré de réalisation où un seul signe est destiné à être caché dans le signal à transmettre au décodeur, la fonction f est la parité de la somme des coefficients de la sous-liste $SE_1$.

Au cours d'une étape C9 représentée à la **figure 1,** le module de traitement MTR_CO vérifie si la parité de la valeur du signe à cacher correspond à la parité de la somme des coefficients de la sous-liste $SE_1$, en vertu d'une convention définie préalablement au codeur CO.

Dans l'exemple proposé, ladite convention est telle qu'un signe positif est associé à un bit de valeur égale à zéro, tandis qu'un signe négatif est associé à un bit de valeur égale à un.

Si, d'après la convention adoptée dans le codeur CO selon l'invention, le signe est positif, ce qui correspond à une valeur de bit de codage à zéro, et que la somme des coefficients de la sous-liste $SE_1$ est paire, il est procédé à l'étape C20 de codage entropique des coefficients de la liste $E_1$ précitée, à l'exception du signe du coefficient $\varepsilon2$.

Si, toujours d'après la convention adoptée dans le codeur CO selon l'invention, le signe est négatif, ce qui correspond à une valeur de bit de codage à un, et que la somme des coefficients de la sous-liste $SE_1$ est impaire, il est également procédé à l'étape C20 de codage entropique des coefficients de la liste $E_1$ précitée, à l'exception du signe du coefficient $\varepsilon2$.

Si, d'après la convention adoptée dans le codeur CO selon l'invention, le signe est positif, ce qui correspond à une valeur de bit de codage à zéro, et que la somme des coefficients de la sous-liste $SE_1$ est impaire, il est procédé, au cours d'une étape C10 représentée sur la **figure 1,** à une modification d'au moins un coefficient modifiable de la sous-liste $SE_1$.

Si, toujours d'après la convention adoptée dans le codeur CO selon l'invention, le signe est négatif, ce qui correspond à une valeur de bit de codage à un, et que la somme des coefficients de la sous-liste $SE_1$ est paire, il est également procédé à l'étape C10 de modification d'au moins un coefficient modifiable de la sous-liste $SE_1$.

Une telle opération de modification est effectuée par le module de traitement MTR_CO de la **figure 2.**

Dans l'exemple de réalisation où $SE_1$=(+9,-7,0,0,+1,0,-1,+2,0,0,+1), la somme totale f des coefficient est égale à 5, et est donc impaire. Afin que le décodeur puisse reconstruire le signe positif affecté au premier coefficient non nul, $\varepsilon2$=+9, sans que le codeur CO n'ait à transmettre ce coefficient au décodeur, il faut que la parité de la somme devienne paire. En conséquence, le module de traitement MTR_CO teste, au cours de ladite étape C10, différentes modifications de coefficients de la sous-liste $SE_1$, visant toutes à changer la parité de la somme des coefficients. Dans le mode préféré de réalisation, il est procédé à l'ajout de +1 ou -1 à chaque coefficient modifiable et à la sélection d'une modification parmi toutes celles qui sont effectuées.

Dans le mode préféré de réalisation, une telle sélection constitue la prédiction optimale selon un critère de performance qui est par exemple le critère débit distorsion bien connu de l'homme du métier. Un tel critère s'exprime par l'équation (1) ci-dessous:

$$(1)\ J=D+\lambda R$$

où

D représente la distorsion entre le macrobloc original et le macrobloc reconstruit, R représente le coût en bits du codage des informations de codage et $\lambda$ représente un multiplicateur de Lagrange, dont la valeur peut être fixée préalablement au codage.

Dans l'exemple proposé, la modification qui entraîne une prédiction optimale selon le critère débit-distorsion précité est l'ajout de la valeur 1 au deuxième coefficient -7 de la sous-liste $SE_1$.

Il est alors obtenu, à l'issue de l'étape C10, une sous-liste modifiée $SEm_1$=(+9,+6,0,0,+1,0,-1,+2,0,0,+1)

Il convient de noter qu'au cours de cette étape, certaines modifications sont interdites. Ainsi, dans le cas où le premier coefficient non nul $\varepsilon2$ aurait valu +1, il n'aurait pas été possible de lui ajouter -1, car il serait devenu nul, et il aurait alors perdu sa caractéristique de premier coefficient non nul de la liste $E_1$. Le décodeur aurait alors attribué ultérieurement le signe décodé (par calcul de la parité de la somme des coefficients) à un autre coefficient, et il y aurait alors eu une erreur de décodage.

Au cours d'une étape C11 représentée à la **figure 1,** le module de traitement MTR_CO procède à une modification correspondante de la liste $E_1$. La liste modifiée suivante $Em_1$= (0,+9,-6,0,0,+1,0,-1,+2,0,0,+1,0,0,0,0) est alors obtenue.

Il est ensuite procédé à l'étape C20 de codage entropique des coefficients de la liste $Em_1$ précitée, à l'exception du signe du coefficient $\varepsilon2$, qui est le signe + du coefficient 9 dans l'exemple proposé, lequel signe est caché dans la parité de la somme des coefficients.

Il convient de noter que l'ensemble des amplitudes des coefficients de la liste $E_1$ ou de la liste modifiée $Em_1$ est codé avant l'ensemble des signes, à l'exclusion du signe du premier coefficient non nul $\varepsilon2$ qui n'est pas codé comme cela a été expliqué ci-dessus.

Au cours d'une étape suivante C30 représentée à la **figure 1,** le module de codage MC_CO de la **figure 2** teste si le bloc courant codé est le dernier bloc de l'image IE,

Si le bloc courant est le dernier bloc de l'image IE, au cours d'une étape C40 représentée à la **figure 1,** il est mis fin au procédé de codage.

Si tel n'est pas le cas, il est procédé à la sélection du bloc suivant $B_i$ qui est alors codé conformément à l'ordre de parcours raster scan précité, par itération des étapes C1 à C20, pour $1 \leq i \leq Z$.

Une fois réalisé le codage entropique de tous les blocs $B_1$ à $B_z$, il est procédé à la construction d'un signal F représentant, sous forme binaire, lesdits blocs codés.

La construction du signal binaire F est mise en œuvre dans un module logiciel CF de construction de flux, tel que représenté sur la **figure 2.**

Le flux F est ensuite transmis par un réseau de communication (non représenté), à un terminal distant. Celui-ci comporte un décodeur qui sera décrit plus en détail dans la suite de la description.

On va maintenant décrire, principalement en référence à la **figure 1,** un autre mode de réalisation de l'invention.

Cet autre mode de réalisation se distingue du précédent uniquement par le nombre de coefficients à cacher qui est soit 0, soit N, N étant un entier tel que $N \geq 2$.

A cet effet, la sous-étape de comparaison C72 précitée est remplacée par la sous-étape C72a représentée en pointillé sur la **figure 1**, au cours de laquelle il est procédé à la comparaison du nombre de coefficients modifiables avec plusieurs seuils prédéterminés $0 < TSIG\_1 < TSIG\_2 < TSIG\_3...$, de telle façon que si le nombre de coefficients modifiables est compris entre TSIG_N et TSIG_N+1, N signes sont destinés à être cachés.

Si le nombre de coefficients modifiables est inférieur au premier seuil TSIG_1, il est procédé, au cours de l'étape C20 précitée, au codage entropique classique des coefficients de la liste $E_1$. A cet effet, le signe de chaque coefficient non nul de la liste $E_1$ est codé entropiquement.

Si le nombre de coefficients modifiables est compris entre le seuil TSIG_N et TSIG_N+1, au cours d'une étape C8 représentée à la **figure 1**, le module de traitement MTR_CO calcule la valeur d'une fonction f qui est représentative des coefficients de la sous-liste $E_1$.

Dans cet autre mode de réalisation, la décision au codeur étant de cacher N signes, la fonction f est le reste modulo $2^N$ de la somme des coefficients de la sous-liste $SE_1$, On suppose que dans l'exemple proposé, N=2, les deux signes à cacher étant les deux premiers signes des deux premiers coefficients non nuls respectivement, à savoir $\varepsilon2$ et $\varepsilon3$.

Au cours de l'étape suivante C9 représentée à la **figure 1,** le module de traitement MTR_CO vérifie si la configuration des N signes, soit $2^N$ configurations possibles, correspond à la valeur du reste modulo $2^N$ de la somme des coefficients de la sous-liste $SE_1$.

Dans l'exemple proposé où N=2, il existe $2^2$=4 configurations de signes différentes.

Ces quatre configurations obéissent à une convention au codeur CO, laquelle est par exemple déterminée de la façon suivante :

- un reste égal à zéro correspond à deux signes positifs consécutifs : +, + ;
- un reste égal à un correspond à un signe positif et un signe négatif consécutifs : +, - ;
- un reste égal à deux correspond à un signe négatif et un signe positif consécutifs : -, + ;
- un reste égal à trois correspond à deux signes négatifs consécutifs : -, -.

Si la configuration des N signes correspond à la valeur du reste modulo $2^N$ de la somme des coefficients de la sous-liste $SE_1$, il est procédé à l'étape C20 de codage entropique des coefficients de la liste $E_1$ précitée, à l'exception du signe du coefficient $\varepsilon2$ et du coefficient $\varepsilon3$, lesquels signes sont cachés dans la parité de la somme modulo $2^N$ des coefficients.

Si tel n'est pas le cas, il est procédé à l'étape C10 de modification d'au moins un coefficient modifiable de la sous-liste $SE_1$. Une telle modification est effectuée par le module de traitement MTR_CO de la **figure 2** de telle manière que le reste modulo $2^N$ de la somme des coefficients modifiables de la sous-liste $SE_1$ atteigne la valeur de chacun des deux signes à cacher.

Au cours de l'étape C11 précitée, le module de traitement MTR_CO procède à une modification correspondante de la liste $E_1$. Une liste modifiée $Em_1$ est alors obtenue.

Il est ensuite procédé à l'étape C20 de codage entropique des coefficients de la liste $Em_1$ précitée, à l'exception du signe du coefficient $\varepsilon2$ et du signe du coefficient $\varepsilon3$, lesquels signes sont cachés dans la parité de la somme modulo $2^N$ des coefficients.

Description détaillée de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

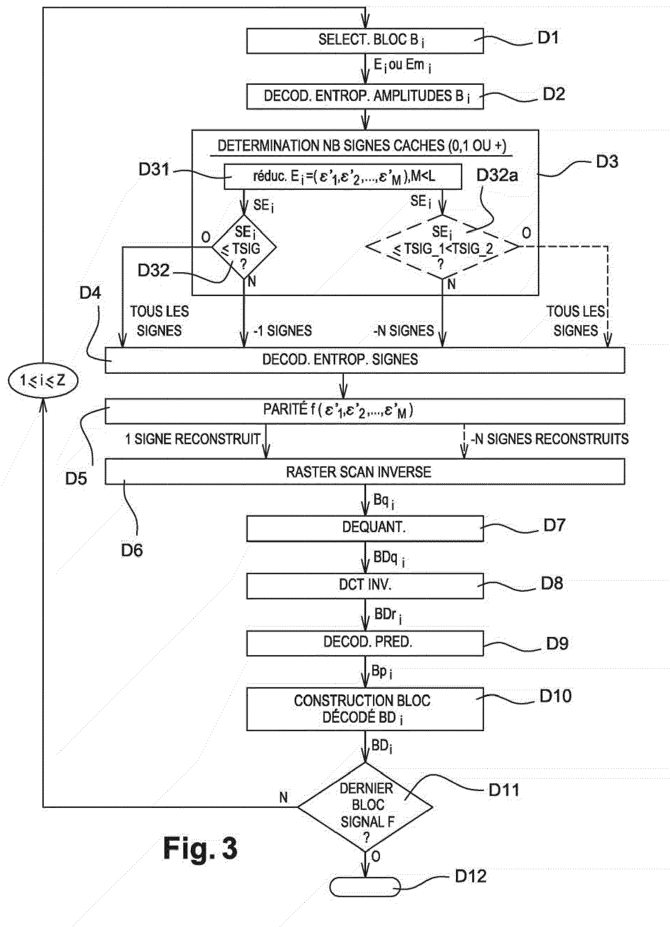

Le procédé de décodage selon l'invention est représenté sous la forme d'un algorithme comportant des étapes D1 à D12 représentées à la **figure 3.**

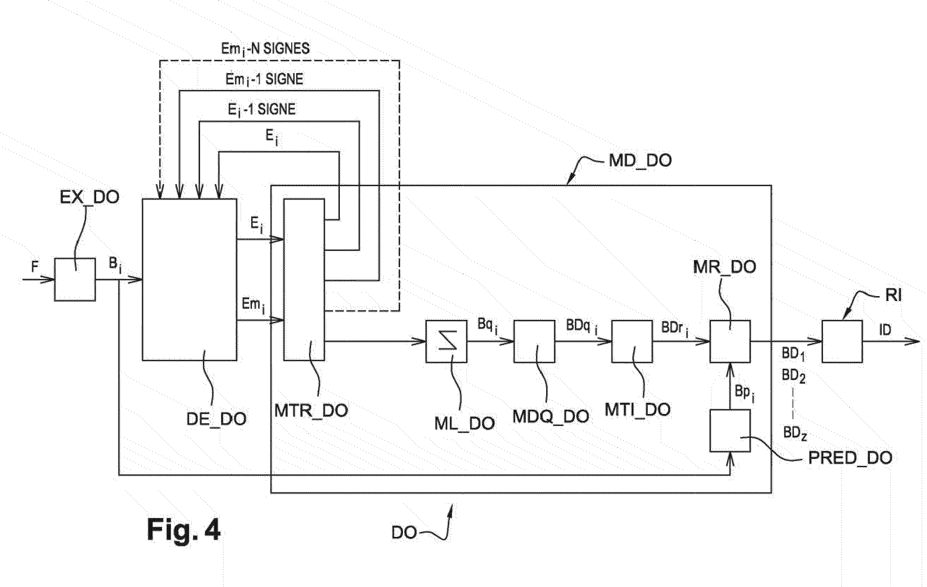

Selon le mode de réalisation de l'invention, le procédé de décodage selon l'invention est implémenté dans un dispositif de décodage ou décodeur DO, tel que représenté à la **figure 4.**

Au cours d'une étape préliminaire non représentée sur la **figure 3,** il est procédé à l'identification, dans le signal de données F reçu, des partitions $B_1$ à $B_z$ qui ont été codées précédemment par le codeur CO. Dans le mode préféré de réalisation, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module logiciel EX_DO d'analyse de flux, tel que représenté à la **figure 4.**

Au cours d'une étape D1 représentée à la **figure 3,** le module EX_DO de la **figure 4** sélectionne comme bloc courant $B_i$ le premier bloc $B_1$ à décoder. Une telle sélection consiste par exemple à placer un pointeur de lecture dans le signal F au début des données du premier bloc $B_1$.

Il est ensuite procédé au décodage de chacun des blocs codés sélectionnés.

Dans l'exemple représenté sur la figure 3, un tel décodage est appliqué successivement à chacun des blocs codés $B_1$ à $B_z$. Les blocs sont décodés selon par exemple un parcours « raster scan » bien connu de l'homme du métier.

Le décodage selon l'invention est mis en œuvre dans un module logiciel de décodage MD_DO du décodeur DO, tel que représenté sur la **figure 4.**

Au cours d'une étape D2 représentée à la **figure 3,** il est d'abord procédé au décodage entropique du premier bloc courant $B_1$ qui a été sélectionné. Une telle opération est effectuée par un module de décodage entropique DE_DO représenté sur la **figure 4,** par exemple de type CABAC. Au cours de cette étape, le module DE_DO effectue un décodage entropique des informations numériques correspondant à l'amplitude de chacun des coefficients codés de la liste $E_1$ ou de la liste modifiée $Em_1$. A ce stade, seuls les signes des coefficients de la liste $E_1$ ou de la liste modifiée $Em_1$ ne sont pas décodés.

Au cours d'une étape D3 représentée à la **figure 3,** il est procédé à la détermination du nombre de signes susceptibles d'avoir été cachés au cours de l'étape précédente de codage entropique C20. Une telle étape D3 est effectuée par un module logiciel de traitement MTR_DO, tel que représenté sur la **figure 4.** L'étape D3 est similaire à l'étape C7 précitée de détermination du nombre de signes à cacher.

Dans le mode préféré de réalisation, le nombre de signes cachés est un ou zéro. En outre, conformément audit mode de réalisation préféré, c'est le signe du premier coefficient non nul qui est caché. Dans l'exemple représenté, il s'agit donc du signe positif du coefficient $\varepsilon 2=+9$.

Dans un mode de réalisation alternatif, le nombre de signes cachés est soit zéro, soit un, soit deux, soit trois, soit plus.

Conformément au mode de réalisation préféré de l'étape D3, il est procédé, au cours d'une première sous-étape D31 représentée à la **figure 3**, à la détermination, à partir de ladite liste $E_1$ ou de la liste modifiée $Em_1$, d'une sous-liste contenant des coefficients $\varepsilon'1$, $\varepsilon'2$,..., $\varepsilon'M$ où M<L susceptibles d'avoir été modifiés au codage.

Une telle détermination est effectuée de la même manière qu'à l'étape de codage C7 précitée.

Comme le module de traitement MTR_CO précité, le module de traitement MTR_DO est configuré initialement pour ne pas modifier :

- le ou les coefficients nuls situés avant le premier coefficient non nul,
- et pour des raisons de complexité de calcul, le ou les coefficients nuls situés après le dernier coefficient non nul.

Dans l'exemple représenté, à l'issue de la sous-étape D31, il s'agit de la sous-liste $SEm_1$ telle que $SEm_1$ = (9, -6, 0, 0, 1, 0, -1, 2, 0, 0, 1). En conséquence, onze coefficients susceptibles d'avoir été modifiés sont obtenus.

Au cours d'une sous-étape suivante D32 représentée à la **figure 3**, le module de traitement MTR_DO procède à la comparaison du nombre de coefficients susceptibles d'avoir été modifiés avec un seuil prédéterminé TSIG. Dans le mode préféré de réalisation, TSIG vaut 4.

Si le nombre de coefficients susceptibles d'avoir été modifiés est inférieur au seuil TSIG, il est procédé, au cours d'une étape D4 représentée à la **figure 3**, à un décodage entropique classique de tous les signes des coefficients de la liste $E_1$ Un tel décodage est effectué par le décodeur CABAC, désigné par la référence DE_DO sur la **figure 4**. A cet effet, le signe de chaque coefficient non nul de la liste $E_1$ est décodé entropiquement.

Si le nombre de coefficients susceptibles d'avoir été modifiés est supérieur au seuil TSIG, il est procédé, au cours de ladite étape D4, au décodage entropique classique de tous les signes des coefficients de la liste $Em_1$, à l'exception du signe du premier coefficient non nul $\varepsilon 2$.

Au cours d'une étape D5 représentée à la **figure 3**, le module de traitement MTR_DO calcule la valeur d'une fonction f qui est représentative des coefficients de la sous-liste $SEm_1$ de façon à déterminer si la valeur calculée est paire ou impaire.

Dans le mode préféré de réalisation où un seul signe est caché dans le signal F, la fonction f est la parité de la somme des coefficients de la sous-liste $SEm_1$.

Conformément à la convention utilisée au codeur CO, qui est la même au décodeur DO, une valeur paire de la somme des coefficients de la sous-liste $SEm_1$ signifie que le signe du premier coefficient non nul de la liste modifiée $Em_1$ est positif, tandis qu'une valeur impaire de la somme des coefficients de la sous-liste $SEm_1$ signifie que le signe du premier coefficient non nul de la liste modifiée $Em_1$ est négatif.

Dans l'exemple de réalisation où $SEm_1$=(+9,-6,0,0,+1,0,-1,+2,0,0,+1), la somme totale des coefficient est égale à 6, et est donc paire. En conséquence, à l'issue de l'étape D5, le module de traitement MTR_DO en déduit que le signe caché du premier coefficient non nul $\varepsilon 2$ est positif.

Au court d'une étape D6 représentée à la **figure 3**, et à l'aide de toutes les informations numériques reconstruites au cours des étapes D2, D4 et D5, il est procédé à la reconstruction des coefficients quantifiés du bloc $Bq_1$ dans un ordre prédéfini. Dans l'exemple représenté, il s'agit d'un parcours en zigzag inverse au parcours en zigzag effectué au cours de l'étape de codage C6 précitée. Une telle étape est effectuée par un module logiciel de lecture ML_DO, tel que représenté à la **figure 4**. Plus précisément, le module ML_DO procède à l'inscription des coefficients de la liste $E_1$ (monodimensionnelle) dans le bloc $Bq_1$ (bidimensionnel), en utilisant ledit ordre de parcours en zigzag inverse.

Au cours d'une étape D7 représentée à la **figure 3**, il est procédé à la déquantification du bloc résidu quantifié $Bq_1$ selon une opération classique de déquantification qui est l'opération inverse de la quantification effectuée à l'étape de codage C5 précitée, pour produire un bloc déquantifié décodé $BDq_1$. Une telle étape est effectuée au moyen d'un module logiciel de déquantification MDQ_DO tel que représenté à la **figure 4.**

Au cours d'une étape D8 représentée à la **figure 3**, il est procédé à la transformation inverse du bloc déquantifié $BDq_1$ qui est l'opération inverse de la transformation directe effectuée au codage à l'étape C4 précitée. Un bloc résidu décodé $BDr_1$ est alors obtenu. Une telle opération est effectuée par un module logiciel MTI_DO de transformée inverse tel que représenté **figure 4.**

Au cours d'une étape D9 représentée à la **figure 3**, il est procédé au décodage prédictif du bloc courant $B_1$. Un tel décodage prédictif est effectué classiquement par des techniques connues de prédiction intra et/ou inter, au cours duquel le bloc $B_1$ est prédit par rapport à au moins un bloc précédemment décodé. Une telle opération est effectuée par un module de décodage prédictif PRED_DO tel que représenté **figure 4.**

Il va de soi que d'autres modes de prédiction intra tels que proposés dans la norme H.264 sont possibles.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit $Bp_1$.

Au cours d'une étape D10 représentée à la **figure 3**, il est procédé à la construction du bloc décodé $BD_1$ en ajoutant au bloc prédit $Bp_1$ le bloc résidu décodé $BDr_1$. Une telle opération est effectuée par un module logiciel de reconstruction MR_DO représenté à la **figure 4.**

Au cours d'une étape D11 représentée à la **figure 3**, le module de décodage MD_DO teste si le bloc courant décodé est le dernier bloc identifié dans le signal F.

Si le bloc courant est le dernier bloc du signal F, au cours d'une étape D12 représentée à la **figure 3**, il est mis fin au procédé de décodage.

Si tel n'est pas le cas, il est procédé à la sélection du bloc suivant $B_i$ à décoder conformément à l'ordre de parcours raster scan précité, par itération des étapes D1 à D10, pour $1 \leq i \leq Z$.

On va maintenant décrire, principalement en référence à la **figure 3**, un autre mode de réalisation de l'invention.

Cet autre mode de réalisation se distingue du précédent uniquement par le nombre de coefficients cachés qui est soit 0, soit N, N étant un entier tel que $N \geq 2$.

A cet effet, la sous-étape de comparaison D32 précitée est remplacée par la sous-étape D32a représentée en pointillé sur la **figure** 3, au cours de laquelle il est procédé à la comparaison du nombre de coefficients susceptibles d'avoir été modifiés avec plusieurs seuils prédéterminés $0 < TSIG\_1 < TSIG\_2 < TSIG\_3...$, de telle façon que si le nombre desdits coefficients est compris entre $TSIG\_N$ et $TSIG\_N+1$, N signes ont été cachés.

Si le nombre desdits coefficients est inférieur au premier seuil $TSIG\_1$, il est procédé, au cours de l'étape D4 précitée, au décodage entropique classique de tous les signes des coefficients de la liste $E_1$. A cet effet, le signe de chaque coefficient non nul de la liste $E_1$ est décodé entropiquement.

Si le nombre desdits coefficients est compris entre le seuil $TSIG\_N$ et $TSIG\_N+1$, il est procédé, au cours de l'étape D4 précitée, au décodage entropique classique de tous les signes des coefficients de la liste $E_1$, à l'exception des N signes respectifs des premiers coefficients non nuls de ladite liste modifiée $Em_1$, lesdits N signes étant cachés.

Dans cet autre mode de réalisation, le module de traitement MTR_DO calcule, au cours de l'étape D5, la valeur de la fonction f qui est le reste modulo $2^N$ de la somme des coefficients de la sous-liste $SEm_1$. On suppose que dans l'exemple proposé, N=2.

Le module de traitement MTR_DO en déduit alors la configuration des deux signes cachés qui sont affectés respectivement à chacun des deux premiers coefficients non nuls $\varepsilon 2$ et $\varepsilon 3$, selon la convention utilisée au codage.

Une fois ces deux signes reconstruits, il est procédé à la réalisation des étapes D6 à D12 décrites ci-dessus.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi par exemple, selon un mode de réalisation simplifié par rapport à celui représenté à la **figure 1**, le codeur CO pourrait être configuré pour cacher au moins N' signes prédéterminés, avec $N' \geq 1$, au lieu de soit zéro, soit un ou N signes prédéterminés. Dans ce cas, l'étape de comparaison C72 ou C72a serait supprimée. De façon correspondante, selon un mode de réalisation simplifié par rapport à celui représenté à la **figure 3**, le décodeur DO serait configuré pour reconstruire N' signes prédéterminés au lieu de soit zéro, soit un ou N signes prédéterminés. Dans ce cas, l'étape de comparaison D32 ou D32a serait supprimée.

En outre, le critère de décision appliqué à l'étape de codage C72 et à l'étape de décodage D32 pourrait être remplacé par un autre type de critère. A cet effet, au lieu de comparer à un seuil le nombre de coefficients modifiables ou le nombre de coefficients susceptibles d'avoir été modifiés, le module de traitement MTR_CO ou MTR_DO pourrait appliquer un critère de décision qui est respectivement fonction de la somme des amplitudes des coefficients modifiables ou susceptibles d'avoir été modifiés, ou encore du nombre de zéros présents parmi les coefficients modifiables ou susceptibles d'avoir été modifiés.

**Modes de réalisation**

Bien que l'invention présente soit définie dans les revendications, il devrait être compris que l'invention présente peut aussi (à l'alternat) être définie conformément aux modes de réalisation suivantes :

1. Procédé de codage d'au moins une image découpée en partitions, ledit procédé mettant en œuvre les étapes de:

- prédiction (C2) des données d'une partition courante en fonction d'au moins une partition de référence déjà codée puis décodée, délivrant une partition prédite;
- détermination (C6) d'un ensemble de données résiduelles par comparaison de données relatives à la partition courante et à la partition prédite, lesdites données résiduelles étant associées respectivement à différentes informations numériques qui sont destinées à subir un codage entropique,

- élaboration d'un signal contenant lesdites informations codées, ledit procédé de codage étant caractérisé en ce qu'il met en œuvre, préalablement à ladite étape d'élaboration de signal, les étapes suivantes:
- détermination (C71), à partir dudit ensemble de données résiduelles déterminé, d'un sous-ensemble contenant des données résiduelles aptes à être modifiées,
- calcul (C8) de la valeur d'une fonction représentative des données résiduelles dudit sous-ensemble déterminé,
- comparaison (C9) de ladite valeur calculée à une valeur d'au moins une desdites informations numériques,
- en fonction du résultat de ladite comparaison, modification (C10) ou non d'au moins une des données résiduelles dudit sous-ensemble,
- en cas de modification, codage entropique (C20) de ladite au moins une donnée résiduelle modifiée.

2. Procédé de codage selon la mode de réalisation 1, dans lequel lesdites étapes qui font suite à ladite étape de détermination dudit sous-ensemble de données résiduelles sont mises en œuvre uniquement si un critère prédéterminé, fonction des données résiduelles aptes à être modifiées, est respecté.

3. Procédé de codage selon la mode de réalisation 2, ledit critère de décision prédéterminé étant fonction du résultat d'une comparaison entre le nombre de données résiduelles aptes à être modifiées et un nombre (TSIG) prédéterminé.

4. Procédé de codage selon la mode de réalisation 1, au cours duquel dans le cas où une pluralité d'informations numériques est considérée au cours de ladite étape de comparaison, cette dernière consiste à comparer la valeur calculée d'une fonction représentative des données résiduelles dudit sous-ensemble déterminé à la valeur d'une fonction représentative de ladite pluralité d'informations numériques.

5. Procédé de codage selon la mode de réalisation 1, ladite au moins une information numérique correspondant au signe d'une donnée résiduelle.

6. Dispositif de codage (CO) d'au moins une image découpée en partitions, ledit dispositif comprenant:

- des moyens (PRED_CO) de prédiction des données d'une partition courante en fonction d'au moins une partition de référence déjà codée puis décodée, délivrant une partition prédite,
- des moyens (MT_CO, MQ_CO, ML_CO) de détermination d'un ensemble de données résiduelles aptes à comparer des données relatives à la partition courante et à la partition prédite, lesdites données résiduelles étant associées respectivement à différentes informations numériques qui sont destinées à subir un codage entropique,
- des moyens (CF) d'élaboration d'un signal contenant lesdites informations codées,

ledit dispositif de codage étant caractérisé en ce qu'il comprend, en amont desdits moyens d'élaboration, des moyens de traitement (MTR_CO) qui sont aptes à:

- déterminer, à partir dudit ensemble de données résiduelles déterminé, d'un sous-ensemble contenant des données résiduelles aptes à être modifiées,

- calculer la valeur d'une fonction représentative des données résiduelles dudit sous-ensemble déterminé,

- comparer ladite valeur calculée à une valeur d'au moins une desdites informations numériques,

- modifier ou non au moins une des données résiduelles dudit sous-ensemble déterminé, en fonction du résultat de ladite modification, ainsi que des moyens (CE_CO) de codage entropique de ladite au moins une donnée résiduelle modifiée, en cas de modification par lesdits moyens de traitement.

7. Procédé de décodage d'un signal de données (F) représentatif d'au moins une image découpée en partitions qui a été précédemment codée, comprenant une étape d'obtention (D2), par décodage entropique de données dudit signal, d'informations numériques associées à des données résiduelles relatives à au moins une partition précédemment codée,
ledit procédé de décodage étant caractérisé en ce qu'il comprend les étapes suivantes:

- détermination (D31), à partir desdites données résiduelles, d'un sous-ensemble contenant des données résiduelles aptes à avoir été modifiées au cours d'un codage précédent,
- calcul (D5) de la valeur d'une fonction représentative des données résiduelles dudit sous-ensemble déterminé,
- obtention de la valeur d'au moins une information numérique différente de celles obtenues par décodage entropique, à partir de ladite valeur calculée.

8. Procédé de décodage selon la mode de réalisation 7, dans lequel lesdites étapes qui font suite à ladite étape de détermination dudit sous-ensemble de données résiduelles sont mises en œuvre uniquement si un critère prédéterminé, fonction des données résiduelles aptes à avoir été modifiées, est respecté.

9. Procédé de décodage selon la mode de réalisation 8, ledit critère de décision prédéterminé étant fonction du résultat d'une comparaison entre le nombre de données résiduelles aptes à avoir été modifiées et un nombre prédéterminé.

10. Procédé de décodage selon la mode de réalisation 7, au cours duquel une pluralité de valeurs associées respectivement à une pluralité d'informations numériques différentes de celles obtenues par décodage entropique est obtenue à partir de ladite valeur calculée.

11. Procédé de décodage selon la mode de réalisation 7, ladite au moins une information numérique correspondant au signe d'une donnée résiduelle.

12. Dispositif (DO) de décodage d'un signal de données représentatif d'au moins une image découpée en partitions qui a été précédemment codée, comprenant des moyens (DE_DO) d'obtention, par décodage entropique de données dudit signal, d'informations numériques associées à des données résiduelles relatives à au moins une partition précédemment codée,
ledit dispositif de décodage étant caractérisé en ce qu'il comprend des moyens de traitement (MTR_DO) qui sont aptes à:

- déterminer, à partir desdites données résiduelles, un sous-ensemble contenant des données résiduelles aptes à avoir été modifiées au cours d'un codage précédent,
- calculer la valeur d'une fonction représentative des données résiduelles dudit sous-ensemble déterminé,
- obtenir la valeur d'au moins une information numérique différente de celles obtenues par décodage entropique, à partir de ladite valeur calculée.

13. Programme d'ordinateur comportant des instructions pour mettre en œuvre le procédé de codage selon l'une quelconque des modes de réalisation 1 à 5, lorsque ledit procédé de codage est exécuté sur un ordinateur.

14. Programme d'ordinateur comportant des instructions pour mettre en œuvre le procédé de décodage selon l'une quelconque des modes de réalisation 7 à 11, lorsque ledit procédé de décodage est exécuté sur un ordinateur.

## Revendications

1. Procédé de codage d'au moins une image découpée en partitions, ledit procédé mettant en œuvre les étapes de:

    - prédiction (C2) des données d'une partition courante en fonction d'au moins une partition de référence déjà codée puis décodée, délivrant une partition prédite;
    - détermination (C6) d'un ensemble de données résiduelles par comparaison de données relatives à la partition courante et à la partition prédite, lesdites données résiduelles étant associées respectivement à différentes informations numériques qui sont destinées à subir un codage entropique,
    - élaboration d'un signal contenant lesdites informations codées, ledit procédé de codage mettant en œuvre, préalablement à ladite étape d'élaboration de signal, les étapes suivantes:

    - détermination (C71), à partir dudit ensemble de données résiduelles déterminé, d'un sous-ensemble contenant des données résiduelles aptes à être modifiées, le sous-ensemble étant déterminé par un premier coefficient non nul et un dernier coefficient non nul, les coefficients nuls situés avant le premier coefficient non nul et les coefficients nuls situés après le dernier coefficient non nul étant non susceptibles d'être modifiés,
    - calcul (C8) de la parité de la somme des coefficients des données résiduelles dudit sous-ensemble déterminé,
    - comparaison (C9) de la somme des coefficients des données résiduelles dudit sous-ensemble déterminé à la parité de la valeur d'un signe du premier coefficient non nul,
    - en fonction du résultat de ladite comparaison, modification (C10) ou non d'au moins une des données résiduelles dudit sous-ensemble,
    - en cas de modification, codage entropique (C20) de ladite au moins une donnée résiduelle modifiée.

2. Procédé de codage selon la revendication 1, dans lequel lesdites étapes qui font suite à ladite étape de détermination dudit sous-ensemble de données résiduelles sont mises en œuvre uniquement si un critère prédéterminé, fonction des données résiduelles aptes à être modifiées, est respecté.

3. Procédé de codage selon la revendication 2, ledit critère prédéterminé étant fonction du résultat d'une comparaison entre le nombre de données résiduelles aptes à être modifiées et un nombre (TSIG) prédéterminé.

4. Dispositif de codage (CO) d'au moins une image découpée en partitions, ledit dispositif comprenant:

des moyens (PRED_CO) de prédiction des données d'une partition courante en fonction d'au moins une partition de référence déjà codée puis dé- codée, délivrant une partition prédite,
des moyens (MT_CO, MQ_CO, ML_CO) de détermination d'un ensemble de données résiduelles aptes à comparer des données relatives à la partition courante et à la partition prédite, lesdites données résiduelles étant associées respectivement à différentes informations numériques qui sont destinées à subir un codage entropique,
des moyens (CF) d'élaboration d'un signal contenant lesdites informations codées, ledit dispositif de codage comprenant, en amont desdits moyens d'élaboration, des moyens de traitement (MTR_CO) qui sont aptes à:

déterminer, à partir dudit ensemble de données résiduelles déterminé, d'un sous-ensemble contenant des données résiduelles aptes à être modifiées, le sous-ensemble étant déterminé par un premier coefficient non nul et un dernier coefficient non nul, les coefficients nuls situés avant le premier coefficient non nul et les coefficients nuls situés après le dernier coefficient non nul étant non susceptibles d'être modifiés,
calculer la parité de la somme des coefficients des données résiduelles dudit sous-ensemble déterminé,
comparer la somme des coefficients des données résiduelles dudit sous-ensemble déterminé à la parité de la valeur d'un signe du premier coefficient non nul,
modifier ou non au moins une des données résiduelles dudit sous-ensemble déterminé, en fonction du résultat de ladite modification,

ainsi que des moyens (CE_CO) de codage entropique de ladite au moins une donnée résiduelle modifiée, en cas de modification par lesdits moyens de traitement.

5. Programme d'ordinateur comportant des instructions pour mettre en œuvre le procédé de codage selon l'une quelconque des revendications 1 à 3, lorsque ledit procédé de codage est exécuté sur un ordinateur.

6. Support d'enregistrement lisible par ordinateur mémorisant un flux de données représentatif d'au moins une image découpée en partitions, qui a été précédemment codée, le flux de données comprenant:

des coefficients d'une partition (Bi) de cette au moins une image codée, lesdits coefficients représentant un bloc de données résiduelles de la partition, les données résiduelles comprenant un sous-ensemble contenant des données résiduelles aptes à être modifiées, le sous-ensemble étant déterminé par un premier coefficient non nul et un dernier coefficient non nul, les coefficients nuls situés avant le premier coefficient non nul et les coefficients nuls situés après le dernier coefficient non nul étant non susceptibles d'être modifiés,
le flux de données étant **caractérisé en ce que** le signe du premier coefficient non nul est défini par la parité de la somme des coefficients des données résiduelles dudit sous-ensemble déterminé.

7. Support, selon la revendication 6, **caractérisé en ce qu'**il comporte un moyen de stockage, tel qu'une ROM, un CD ROM, une ROM de circuit microélectronique, un moyen d'enregistrement magnétique tel qu'une disquette ou un disque dur.

8. Support, selon la revendication 7, **caractérisé en ce que**, un tel support d'enregistrement peut être un circuit intégré dans lequel un programme est incorporé.

**Fig. 1**

Fig. 2

**Fig. 3**

Fig. 4

Europäisches
Patentamt

European
Patent Office

Office européen
des brevets

# RAPPORT DE RECHERCHE EUROPEENNE

Numéro de la demande

EP 21 18 3244

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ANONYMOUS: "High Efficiency Video Coding (HEVC) Working Draft 4", 97. MPEG MEETING;18-7-2011 - 22-7-2011; TORINO; (MOTION PICTURE EXPERT GROUP OR ISO/IEC JTC1/SC29/WG11), no. N12186, 2 octobre 2011 (2011-10-02), XP030018681, * page 66 - page 77 * ----- | 1-8 | INV. H04N19/117 H04N19/13 H04N19/176 H04N19/18 H04N19/463 H04N19/467 H04N19/48 H04N19/91 |
| A | JEAN-MARC THIESSE ET AL: "Rate Distortion Data Hiding of Motion Vector Competition Information in Chroma and Luma Samples for Video Compression", IEEE TRANSACTIONS ON CIRCUITS AND SYSTEMS FOR VIDEO TECHNOLOGY, IEEE SERVICE CENTER, PISCATAWAY, NJ, US, vol. 21, no. 6, 1 juin 2011 (2011-06-01), pages 729-741, XP011325921, ISSN: 1051-8215, DOI: 10.1109/TCSVT.2011.2130330 * le document en entier * ----- | 1-8 | |
| A | SUNG MIN KIM ET AL: "Data Hiding on H.264/AVC Compressed Video", 22 août 2007 (2007-08-22), IMAGE ANALYSIS AND RECOGNITION; [LECTURE NOTES IN COMPUTER SCIENCE], SPRINGER BERLIN HEIDELBERG, BERLIN, HEIDELBERG, PAGE(S) 698 - 707, XP019097872, ISBN: 978-3-540-74258-6 * le document en entier * ----- -/-- | 1-8 | **DOMAINES TECHNIQUES RECHERCHES (IPC)** H04N |

Le présent rapport a été établi pour toutes les revendications

| Lieu de la recherche | Date d'achèvement de la recherche | Examinateur |
|---|---|---|
| Munich | 22 avril 2022 | Cyranka, Oliver |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...............................................................
& : membre de la même famille, document correspondant

EPO FORM 1503 03.82 (P04C02)

page 1 de 3

Europäisches
Patentamt

European
Patent Office

Office européen
des brevets

# RAPPORT DE RECHERCHE EUROPEENNE

Numéro de la demande

EP 21 18 3244

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | QIMING LI ET AL: "A Reversible Data Hiding Scheme for JPEG Images", 21 septembre 2010 (2010-09-21), ADVANCES IN MULTIMEDIA INFORMATION PROCESSING — PCM 2010, SPRINGER BERLIN HEIDELBERG, BERLIN, HEIDELBERG, PAGE(S) 653 — 664, XP019151677, ISBN: 978-3-642-15701-1 * le document en entier * ----- | 1-8 | |
| A | XIAOJING MA ET AL: "A Data Hiding Algorithm for H.264/AVC Video Streams Without Intra-Frame Distortion Drift", IEEE TRANSACTIONS ON CIRCUITS AND SYSTEMS FOR VIDEO TECHNOLOGY, IEEE SERVICE CENTER, PISCATAWAY, NJ, US, vol. 20, no. 10, 1 octobre 2010 (2010-10-01), pages 1320-1330, XP011317382, ISSN: 1051-8215 * le document en entier * ----- | 1-8 | |
| A | HADAR O ET AL: "Rate distortion optimization for efficient watermarking in the DCT domain", BROADBAND MULTIMEDIA SYSTEMS AND BROADCASTING, 2008 IEEE INTERNATIONAL SYMPOSIUM ON, IEEE, PISCATAWAY, NJ, USA, 31 mars 2008 (2008-03-31), pages 1-8, XP031268612, ISBN: 978-1-4244-1648-6 * le document en entier * ----- | 1-8 | DOMAINES TECHNIQUES RECHERCHES (IPC) |

-/--

Le présent rapport a été établi pour toutes les revendications

| Lieu de la recherche | Date d'achèvement de la recherche | Examinateur |
|---|---|---|
| Munich | 22 avril 2022 | Cyranka, Oliver |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................
& : membre de la même famille, document correspondant

EPO FORM 1503 03.82 (P04C02)

page 2 de 3

Europäisches Patentamt

European Patent Office

Office européen des brevets

# RAPPORT DE RECHERCHE EUROPEENNE

Numéro de la demande

EP 21 18 3244

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PARUCHURI J K ET AL: "Joint optimization of data hiding and video compression", CIRCUITS AND SYSTEMS, 2008. ISCAS 2008. IEEE INTERNATIONAL SYMPOSIUM ON, IEEE, PISCATAWAY, NJ, USA, 18 mai 2008 (2008-05-18), pages 3021-3024, XP031392649, ISBN: 978-1-4244-1683-7 * le document en entier * ----- | 1-8 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 22 avril 2022 | Cyranka, Oliver |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)

page 3 de 3